# EUROPEAN PATENT SPECIFICATION

(11) **EP 2 827 561 B1**
(45) Date of publication and mention of the grant of the patent: **06.12.2017**
(21) Application number: 14177582.5
(22) Date of filing: 18.07.2014
(51) Int. Cl.: H04L 29/08

(54) **Server controlled adaptive back off for overload protection using internal error counts**
Servergesteuertes, adaptives Zurücksetzen zum Überlastungsschutz mittels Zählungen interner Fehler
Réduction adaptative contrôlée de serveur pour protection contre les surcharges au moyen de décomptes d'erreurs internes

(30) Priority: 18.07.2013 US 201361847876 P; 16.07.2014 US 201414333038
(43) Date of publication of application: 21.01.2015
(73) Proprietor: Synchronoss Technologies, Inc., Bridgewater, NJ 08807 (US)
(72) Inventor: Byrne, Eoin, Dublin, 14 (IE)
(74) Representative: Branderhorst, Matthijs Pieter Arie

(56) References cited:
- US-A1- 2005 102 393
- US-A1- 2012 030 326

## Description

### Related Applications

This application claims benefit of priority under 35 U.S. C. section 119(e) of the copending United States Provisional Patent Application Serial No. 61/847,876, filed July 18, 2013, entitled "Server Controlled Adaptive Back Off for Overload Protection Using Internal Error Counts".

### Field of Invention

The present invention relates to server overload protection. More particularly, the present invention relates to server controlled adaptive back off for overload protection using internal error counts.

### Background of the Invention

During busy periods, such as product upgrades or external event-triggered high traffic periods, HTTP servers can be subjected to loads far in access of their intended operating loads. Existing solutions for overloads expect clients to solve the issue by controlling how often the clients retry. However, these existing solutions rely on complex error handling behavior built into each implementation of the clients and force decisions of when a retry should be attempted by a respective client.

For example, a backup product, which allows backup of pictures from mobile phones, has existed in the market for some time and has a large install base of millions of users. If that product was to be upgraded to also support the backup of other files, such as audio files and videos, then there exists a real danger of a traffic storm, where the upgrade is pushed out to millions of users over a very short period of time. Each user would start backups containing all the existing audio and video files, which represents months, or even years, of normal user load. This could result in an overload on the server, which is being asked to process a year long backlog of work for each user over a very short period of time. Other scenarios involve large numbers of people reacting to an external event, such as a natural disaster or the like, that can spawn huge traffic spikes far in excess of the normal load the server is sized to handle.

A prior art solution is known as client exponential back off. In this case, each client receives an error, waits a preconfigured amount of time and retries. If that request encounters an error, the client will wait a longer amount of time before retrying again. This will continue until a preconfigured amount of attempts is made with the time between each attempt increasing exponentially. This approach relies on the clients behaving in the correct way. The server is still under significant load as all the clients increase their back off times with early failures. Due to the exponential back off in each client being the same, the server could be hit with multiple waves of attempts. If initial contacts of all the clients are at a similar time, then all subsequent attempts will be at roughly the same time too. This will increase the server overhead as the server spends its time dealing with errors rather than dealing with requests and getting work done.

Another prior art solution is known as server dictated back off. This other common approach is to use a protocol feature that enables the server to instruct the clients to retry after a constant but configurable time after each error. This generally behaves worse than the client exponential back off because, without the exponential component, the server is constantly hit with waves of requests at fixed short intervals. US 2005/102393 relates to techniques for adaptive load balancing according to a server's operating conditions.

US 2012/030326 relates to a method of servicing multiple requests from the same client depending on the number of attempts of the request made by the client device.

### Brief Summary of the Invention

The invention is defined by a non-transitory computer-readable medium according to claim 1 and a device according to claim 12. Further embodiments are set out in the dependent claims. Embodiments of the present invention relate to server controlled adaptive back off for overload protection. The server controls a back off period for each request, which indicates a retry time of when a request should be resent to the server. This back off approach relies on the server since the server has much more accurate information available on which to make back off decisions. The server changes the retry time based on how busy it is and its ability to handle the current load and/or its downstream dependent systems. This back off approach increases server stability during a very high load, such as when a service is first turned on and receives much higher than average traffic levels from well-behaved clients, by spreading the load out over a longer time period. The server is able to turn a traffic spike into a constant load, which is easier and more efficient for the server to handle.

In one aspect, a non-transitory computer-readable medium is provided. The non-transitory computer-readable medium stores instructions that, when executed by a computing device, cause the computing device to perform a method. The method includes hosting at least one service, communicatively coupling with a first end-user device, receiving a request from the first end-user device for the at least one service, controlling a back off period of the first end-user device by determining a retry time that is specific to the request from the first end-user device, and relaying the retry time to the first end-user device.

In some embodiments, the retry time is based at least on a function of an internal error rate, wherein the internal error rate is observed over a time period. In some embodiments, the internal error rate is associated with a number of requests that have been rejected within the time period. In some embodiments, the internal error rate is observed on a per service basis.

In some embodiments, the retry time is based on a function of an error rate observed from downstream systems. In some embodiments, the retry time is based on a function of a number of pending downstream events.

In some embodiments, the retry time is based on a priority access associated with a user of the first end-user device.

In some embodiments, the method also includes receiving, after the retry time has passed, the request for the at least one service resent from the first end-user device. If the server is able to handle the resent request, then the resent request is processed. If the server is unable to handle the resent request, then the step of controlling a back off period and the step of relaying the retry time are repeated.

In some embodiments, the method also includes receiving a request for the at least one service from a second end-user device at substantially the same time as the request for the at least one service from the first end-user device is received, wherein a retry time determined for the request from the second end-user device is different from the retry time determined for the request from the first end-user device.

In some embodiments, the method also includes receiving a request for the at least one service from a second end-user device after receiving the request for the at least one service from the first end-user device, wherein a retry time determined for the request from the second end-user device is shorter than the retry time determined for the request from the first end-user device.

In some embodiments, the method also includes receiving a request for the at least one service from a second end-user device after receiving the request for the at least one service from the first end-user device, wherein a retry time determined for the request from the second end-user device is longer than the retry time determined for the request from the first end-user device.

In another aspect, a non-transitory computer-readable medium is provided. The non-transitory computer-readable medium stores instructions that, when executed by a computing device, cause the computing device to perform a method. The method includes receiving a plurality of requests from end-user devices that are communicatively coupled with the computing device and, based on a function of an internal error rate, determining a retry time for a first subset of the end-user devices.

In some embodiments, the internal rate is observed on a per service basis.

In some embodiments, the retry time adjusts to computing device overloads and recoveries.

The method also includes informing the first subset of the end-user devices of the retry time, and processing corresponding requests from a second subset of the end-user devices.

In some embodiments, corresponding requests from the first subset of the end-user devices and the corresponding requests from the second subset of the end-user devices are for the same service.

In some embodiments, corresponding requests from a third subset of the end-user devices are for a service that is different from a service that the first subset of the end-user devices is requesting, wherein the method further includes processing the corresponding requests from the third subset of the end-user devices prior to processing corresponding requests from the first subset of the end-user devices.

In some embodiments, the method also includes turning a traffic spike into a constant load.

In yet another aspect, a computing device is provided. The computing device includes a system load during a traffic spike, a network interface for communicatively coupling with at least one end-user device to receive a request, and a non-transitory computer-readable medium storing instructions. The instructions implements a counter that counts a number of errors that have occurred within a time period, and a server controlled adaptive back off module that adjusts a retry time based on an error rate over the time period. The retry time is typically relayed to the at least one end-user device such that the system load is spread over time.

In some embodiments, the network interface receives the request resent from the at least one end-user after the retry time has passed.

In some embodiments, the retry time calculated at a first point in time is longer than the retry time calculated at a second point in time subsequent the first point in time. Alternatively, the retry time calculated at a first point in time is shorter than the retry time calculated a second point in time subsequent the first point in time.

In some embodiments, the error rate is observed across all services hosted by the computing device. Alternatively, the error rate is observed on a per service basis.

In some embodiments, the retry time is based on a priority access associated with a user of the at least one end-user device.

In some embodiments, the server controlled adaptive back off module influences how end-user devices that is communicatively coupled with the computing device behave, wherein each influence is different.

### Brief Description of the Drawings

The foregoing will be apparent from the following more particular description of example embodiments of the invention, as illustrated in the accompanying drawings in which like reference characters refer to the same parts throughout the different views. The drawings are not necessarily to scale, emphasis instead being placed upon illustrating embodiments of the present invention.
FIG. 1 illustrates an exemplary system according to an embodiment of the present invention.
FIG. 2 illustrates a block diagram of an exemplary computing device according to an embodiment of the present invention.
FIG. 3 illustrates an exemplary method according to an embodiment of the present invention.
FIG. 4 illustrates yet another exemplary method according to an embodiment of the present invention.

### Detailed Description of the Invention

In the following description, numerous details are set forth for purposes of explanation. However, one of ordinary skill in the art will realize that the invention can be practiced without the use of these specific details. Thus, the present invention is not intended to be limited to the embodiments shown but is to be accorded the widest scope consistent with the principles and features described herein.

Embodiments of the present invention relate to server controlled adaptive back off for overload protection. The server controls a back off period for each request, which indicates a retry time of when a request should be resent to the server. This back off approach relies on the server since the server has much more accurate information available on which to make back off decisions. The server changes the retry time based on how busy it is and its ability to handle the current load and/or its downstream dependent systems. This back off approach increases server stability during a very high load, such as when a service is first turned on and receives much higher than average traffic levels from well-behaved clients, by spreading the load out over a longer time period. The server is able to turn a traffic spike into a constant load, which is easier and more efficient for the server to handle.

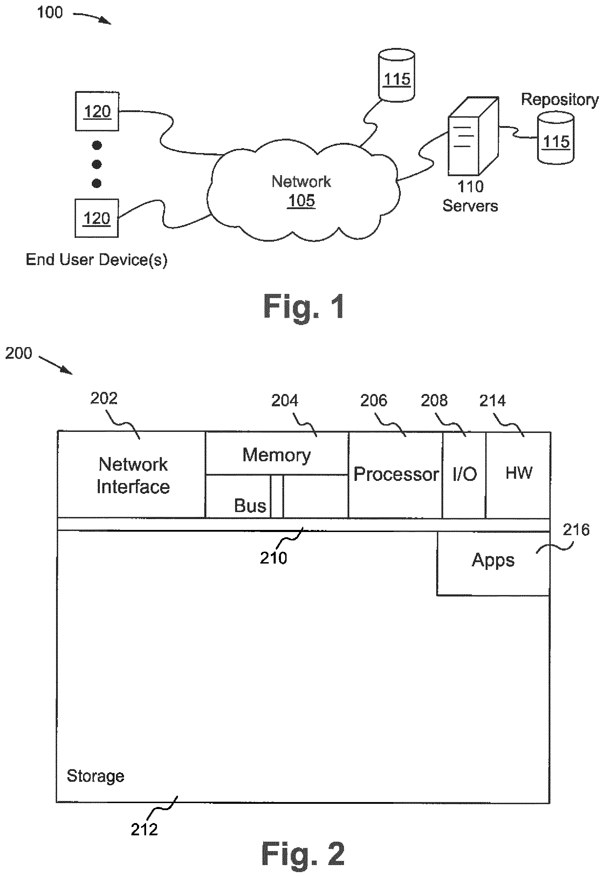

FIG. 1 illustrates an exemplary system 100 according to an embodiment of the present invention. The system 100 typically includes a network 105, such as the Internet, and a server(s) 110 that is communicatively coupled with the network 105. The server 110 is configured to provide at least one service to users. The server 110 can be a backup server, an application server, a web server, a news server or the like. The server can be communicatively coupled with one or more repositories 115 for storing and/or retrieving data. In some embodiments, the one or more repositories 115 can store subscriber information and backup data of subscribers of the at least one service. Other types of data can be stored in the one or more repositories 115.

The server 110 typically includes a counter and a server controlled adaptive back off module, which can be implemented in software, hardware or a combination thereof. Briefly, the counter counts a number of errors that have occurred within a time period, and the server controlled adaptive back off module adjusts a retry time based on a function of an internal error rate over that time period. The error rate is typically associated with a number of requests that have been rejected by the server 110 within that time period. The internal error rate can be observed on a per service basis. Alternatively, the internal error rate can be observed across all services hosted by or on the server 110. In some embodiments, the server also adjusts the retry time based on a function an error rate observed from downstream systems and/or based on a function of a number of pending downstream events.

The system 100 also includes at least one end-user device 120. Each end-user device 120 typically belongs to or is used by a user to request the at least one service hosted by or on the server 110. In some embodiments, each user has an account that allows a respective user to subscribe to or access the at least one service. In some embodiments, the account allows the subscriber to set his/her preferences, such as frequency of backup and notifications. The subscriber is typically able to access the account via a web page or a client program installed on the end-user device 120.

As explained elsewhere, the server controlled adaptive back off module influences how end-user devices 120 behave in regards to how long to back off and when to resend requests to the server 110. In some embodiments, each influence is different for every request or for a group of requests. In some embodiments, the server 110 communicates with an end-user device 120 via the client program installed thereon. When each end-user device 120 receives instructions (e.g., retry time) from the server 110, the end-user device 120 typically complies with the instructions.

Assuming that the server 110 is unable to handle or fulfill a request from the end-user device 120, the end-user device 120 will receive an error message and the server 110 will determine a retry time for that request. The determination is typically based on how busy the server 110 is and its ability to handle the current system load and/or its downstream dependent systems. As explained above, the server 110 sets the retry time based on the function of the internal error rate. The server 110 automatically increases the retry time when the server 110 is overloaded and automatically shortens the retry time when it recovers. This allows for a highly adaptive retry time that naturally increases when the server is busy, allowing large spikes to be spread over time.

For example, the retry time calculated at a first point in time is longer than the retry time calculated at a second point in time subsequent the first point in time. For another example, the retry time calculated at a first point in time is shorter than the retry time calculated at a second point in time subsequent the first point in time.

In some embodiments, the retry time can be based on a function an error rate observed from downstream systems and/or based on a function of a number of pending downstream events. For example, during a file upload to the server 110, it is possible that data is arriving faster at the server 110 than it can be written to the repository 115. The server 110 is able to interpret either errors from the repository 115 or long queue times that build up because the repository 115 cannot run fast enough to process all of the requests, and is able to use this information to adjust the retry time to relieve the pressure. The server 110, thus, is able to use the adaptive back off module to protect other servers and/or services in the system 100.

In some embodiments, the retry time can be based on priority access associated with an end-user device or with a user of the end-user device. For example, the server 110 receives a request from User A and a request from User B at substantially the same time or within the same time frame. User A is given a shorter retry time than User B is given because User A has a higher priority than User B. Priority access can be based on a user's subscription service level, an end-user device type, or the like.

After the server 110 determines the retry time, the retry time is relayed to the end-user device 120 from the server 110. The retry time can be communicated with the error message to the end-user device 120. The end-user device 120 must honor or comply with what the server 110 has communicated (e.g., instructions regarding back off period) and retry its request after the retry time is up or within a grace period after the retry time is up. If the server 110 is able to handle this subsequent request, then the server 110 will process the subsequent request. Otherwise, the server 110 will determine yet another retry time and inform the end-user device 120 of the new retry time since the server 110 is again unable to handle this subsequent request.

FIG. 2 illustrates a block diagram of an exemplary computing device 200 according to an embodiment of the present invention. The computing device 200 is able to be used to acquire, cache, store, compute, search, transfer, communicate and/or display information. The server 110 and/or the end-user device 120 of the FIG. 1 can be similarly configured as the computing device 200.

In general, a hardware structure suitable for implementing the computing device 200 includes a network interface 202, a memory 204, processor(s) 206, I/O device(s) 208, a bus 210 and a storage device 212. The choice of processor 206 is not critical as long as a suitable processor with sufficient speed is chosen. In some embodiments, the computing device 200 includes a plurality of processors 206. The memory 204 is able to be any conventional computer memory known in the art. The storage device 212 is able to include a hard drive, CDROM, CDRW, DVD, DVDRW, flash memory card, RAM, ROM, EPROM, EEPROM or any other storage device. The computing device 200 is able to include one or more network interfaces 202. An example of a network interface includes a network card connected to an Ethernet or other type of LAN. The I/O device(s) 208 are able to include one or more of the following: keyboard, mouse, monitor, display, printer, modem, touchscreen, button interface and other devices. Server controlled adaptive back off application(s) 216 are likely to be stored in the storage device 212 and memory 204 and are processed by the processor 206. More or less components shown in FIG. 2 are able to be included in the computing device 200. In some embodiments, server controlled adaptive back off hardware 214 is included. Although the computing device 200 in FIG. 2 includes applications 216 and hardware 214 for implementing the server controlled adaptive back off approach, the server controlled adaptive back off approach is able to be implemented on a computing device in hardware, firmware, software or any combination thereof. For example, in some embodiments, the server controlled adaptive back off software 216 is programmed in a memory and executed using a processor. In another example, in some embodiments, the server controlled adaptive back off hardware 214 is programmed hardware logic including gates specifically designed to implement the method.

In some embodiments, the server controlled adaptive back off application(s) 216 include several applications and/or module(s). In some embodiments, the modules include one or more sub-modules as well.

The computing device 200 can be a server or an end-user device. Exemplary end-user devices include, but are not limited to, a tablet, a mobile phone, a smart phone, a desktop computer, a laptop computer, a netbook, or any suitable computing device such as special purpose devices, including set top boxes and automobile consoles.

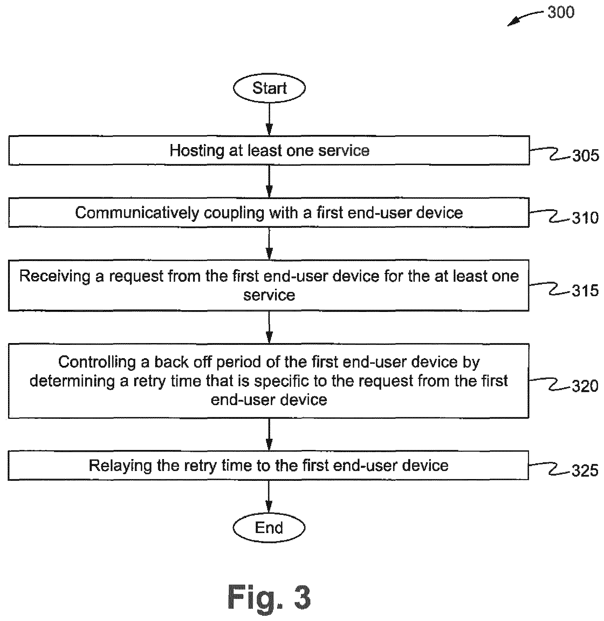

FIG. 3 illustrates an exemplary method 300 according to an embodiment of the present invention. The method 300 is typically performed by the server 110 of FIG. 1 when the server 110 or the repository 115 of FIG. 1 is overloaded. At a step 305, at least one service is hosted by or on the server. An exemplary service is a backup service or a news service. At a step 310, a first end-user device is communicatively coupled therewith and sends a request for the at least one service. At a step 315, the request is received from the first end-user device for the at least one service. At a step 320, a back off period of the first end-user device is controlled. In particular, a retry time that is specific to the request from the first end-user device is determined. The retry time is based on an internal state of the server, such as a percentage of server utilization (e.g., processor, memory, disk, network, pending requests, etc.). Alternatively or in addition to, the retry time can be based a function of an error rate of downstream systems and/or based on a function of a number of pending downstream events. Alternatively or in addition to, the retry time can be based on a priority access associated with the first end-user device or a user of the first end-user device. Alternatively or in addition to, the retry time can be based on the type of the service being requested. At a step 325, the retry time is relayed to the first end-user device. Typically, the first end-user device backs off for the duration of the retry time and resends the request at the end of the retry time.

The first end-user device typically honors the instruction(s) from the server and resends the request at the instructed time. If the server is able to handle this subsequent request, which is sent at the end of the back off period, then the server will process the subsequent request. Otherwise, the steps 320 and 325 are repeated. In other words, the server controls the back off period of the first-end user device by determining a new retry time, and relays the new retry time to the first end-user device.

A request for the at least one service from a second end-user device can be received at substantially the same time as the request for the at least one service from the first end-user device is received. In some embodiments, a retry time determined for the request from the second end-user is different from the retry time determined for the request from the first end-user device.

Similarly, the request for the at least one service from the second end-user device can be received after the request for the at least one service from the first end-user device is received. In some embodiments, a retry time determined for the request from the second end-user device is shorter than the retry time determined for the request from the first end-user device. Alternatively, the retry time determined for the request from the second end-user device is longer than the retry time determined for the request from the first end-user device.

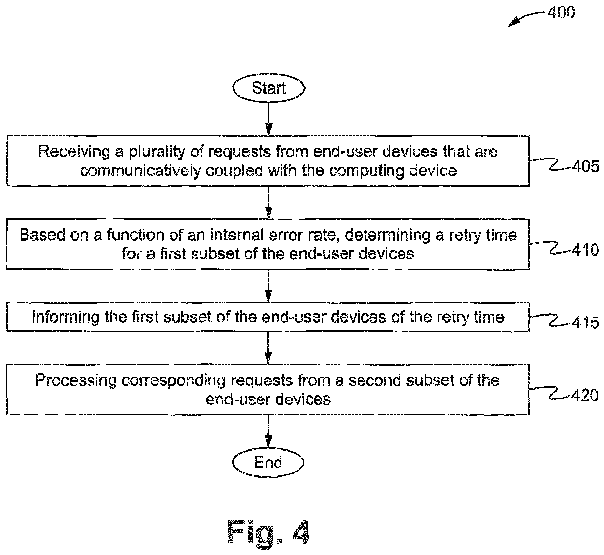

FIG. 4 illustrates yet another exemplary method 400 according to an embodiment of the present invention. The method 400 is typically performed by the server 110 of FIG. 1. At a step 405, a plurality of requests from end-user devices that are communicatively coupled with the server is received. At a step 410, based on a function of an internal error rate, a retry time for a first subset of the end-user devices is determined. At a step 415, the first subset of the end-user devices is informed of the retry time. At a step 420, corresponding requests from a second subset of the end-user devices are processed. In some embodiments, corresponding requests from the first subset of the end-user devices and the corresponding requests from the second subset of the end-user devices are for the same service. In some embodiments, the second subset of the end-user devices has a higher priority than the first subset of the end-user devices.

In some embodiments, corresponding requests from a third subset of the end-user devices are for a service that is different from the service that the first subset of the end-user devices is requesting. Since the internal error rate is observed on a per service basis, as in some embodiments, the corresponding requests from the third subset of the end-user devices can be processed prior to processing the corresponding requests from the first subset of the end-user devices.

In some embodiments, the service provided by the server 110 is a backup service. Typically, a backup session is seamless to the subscriber of the backup service. The backup of data from the subscriber's end-user device to the server 110 is automatic and occurs in the background. Assume the subscriber receives a notification regarding the status of the backup, such as "Backup at 33%." But, the server 110 then becomes busy and the backup is stalled. However, the backup service resumes after the back off period. The notification of the backup are updated as soon as the backup resumes. It should be understood that notifications on end-user devices are application specific and can include the retry time, for example "Service is currently unavailable. Will retry in 10 minutes." The end-user device automatically resends the service request after the back off period is over.

One of ordinary skill in the art will realize other uses and advantages also exist. While the invention has been described with reference to numerous specific details, one of ordinary skill in the art will recognize that the invention can be embodied in other specific forms. Thus, one of ordinary skill in the art will understand that the invention is not to be limited by the foregoing illustrative details, but rather is to be defined by the appended claims.

## Claims

1. A non-transitory computer-readable medium storing instructions that, when executed by a computing device, cause the computing device to perform a method, the method comprising:
hosting at least one service;
communicatively coupling with a first end-user device;
receiving a request from the first end-user device for the at least one service;
controlling a back off period of the first end-user device by determining a retry time that is specific to the request from the first end-user device, wherein the retry time is based on priority access associated with a user of the first end-user device; and
relaying the retry time to the first end-user device.

2. The non-transitory computer-readable medium of Claim 1, wherein the retry time is based at least on a function of an internal error rate of the computing device, wherein the internal error rate is observed over a time period wherein the internal error rate of the computing device is associated with a number of requests that have been rejected within the time period.

3. The non-transitory computer-readable medium of Claim 2, wherein the internal error rate of the computing device is observed on a per service basis.

4. The non-transitory computer-readable medium of Claim 1, wherein the retry time is based on a function a number of pending downstream events.

5. The non-transitory computer-readable medium of Claim 1, wherein the method further includes receiving, after the retry time has passed, the request for the at least one service resent from the first end-user device.

6. The non-transitory computer-readable medium of Claim 5, wherein the method further includes processing the resent request.

7. The non-transitory computer-readable medium of Claim 5, wherein the method further includes repeating the step of controlling a back off period and the step of relaying the retry time.

8. The non-transitory computer-readable medium of Claim 1, wherein the method further includes receiving a request for the at least one service from a second end-user device at the same time as the request for the at least one service from the first end-user device is received, wherein a retry time determined for the request from the second end-user device is different from the retry time determined for the request from the first end-user device.

9. The non-transitory computer-readable medium of Claim 1, wherein the method further includes receiving a request for the at least one service from a second end-user device after receiving the request for the at least one service from the first end-user device, wherein a retry time determined for the request from the second end-user device is shorter than the retry time determined for the request from the first end-user device.

10. The non-transitory computer-readable medium of Claim 1, wherein the method further includes receiving a request for the at least one service from a second end-user device after receiving the request for the at least one service from the first end-user device, wherein a retry time determined for the request from the second end-user device is longer than the retry time determined for the request from the first end-user device.

11. A computing device comprising:
a network interface configured for communicatively coupling with at least one end-user device to receive a request; and
a non-transitory computer-readable medium storing instructions to implement:
a counter that counts a number of errors that have occurred within a time period;,
wherein the errors are rejects of user-device requests by the computing device; and
a server controlled adaptive back off module that is configured to adjust a retry time based on an error rate over the time period and also based on a priority access associated with a user of the at least one end-user device, wherein the retry time is relayed to the at least one end-user device

12. The computing device of Claim 11, wherein consecutively relayed retry times are different.

## Patentansprüche

1. Nichtflüchtiges computerlesbares Medium, das Anweisungen speichert, die, wenn sie durch eine Computervorrichtung ausgeführt werden, die Computervorrichtung veranlassen, ein Verfahren durchzuführen, wobei das Verfahren umfasst:
Bereitstellen mindestens eines Dienstes;
Kommunikatives Koppeln mit einer ersten Endbenutzervorrichtung;
Empfangen einer Anfrage von der ersten Endbenutzervorrichtung nach dem mindestens einen Dienst;
Steuern einer Zurückhaltungszeit der ersten Endbenutzervorrichtung durch Bestimmen einer Wiederholungszeit, die für die Anfrage von der ersten Endbenutzervorrichtung spezifisch ist, worin die Wiederholungszeit auf Prioritätszugriff beruht, der mit einem Benutzer der ersten Endbenutzervorrichtung assoziiert ist; und
Übermitteln der Zurückhaltungszeit zur ersten Endbenutzervorrichtung.

2. Nichtflüchtiges computerlesbares Medium nach Anspruch 1, worin die Wiederholungszeit mindestens auf einer Funktion einer internen Fehlerrate der Computervorrichtung beruht, worin die interne Fehlerrate über einen Zeitraum beobachtet wird, worin die interne Fehlerrate der Computervorrichtung mit einer Anzahl von Anfragen, die innerhalb des Zeitraums abgelehnt worden sind, assoziiert ist.

3. Nichtflüchtiges computerlesbares Medium nach Anspruch 2, worin die interne Fehlerrate der Computervorrichtung pro Dienst beobachtet wird.

4. Nichtflüchtiges computerlesbares Medium nach Anspruch 1, worin die Wiederholungszeit auf einer Funktion einer Anzahl von anstehenden Abwärtsstreckenereignissen beruht.

5. Nichtflüchtiges computerlesbares Medium nach Anspruch 1, worin das Verfahren ferner einschließt: nachdem die Wiederholungszeit vergangen ist, Empfangen der von der ersten Endbenutzervorrichtung erneut gesendeten Anfrage nach dem mindestens einen Dienst.

6. Nichtflüchtiges computerlesbares Medium nach Anspruch 5, worin das Verfahren ferner einschließt: Verarbeiten der erneut gesendeten Anfrage.

7. Nichtflüchtiges computerlesbares Medium nach Anspruch 5, worin das Verfahren ferner einschließt: Wiederholen des Schritts des Steuerns einer Zurückhaltungszeit und des Schritts des Übermittelns der Zurückhaltungszeit.

8. Nichtflüchtiges computerlesbares Medium nach Anspruch 1, worin das Verfahren ferner einschließt: Empfangen einer Anfrage nach dem mindestens einen Dienst von einer zweiten Endbenutzervorrichtung zur gleichen Zeit, wie die Anfrage nach dem mindestens einen Dienst von der ersten Endbenutzervorrichtung empfangen wird, worin eine für die Anfrage von der zweiten Endbenutzervorrichtung bestimmte Wiederholungszeit sich von der für die Anfrage von der ersten Endbenutzervorrichtung bestimmten Wiederholungszeit unterscheidet.

9. Nichtflüchtiges computerlesbares Medium nach Anspruch 1, worin das Verfahren ferner einschließt: Empfangen einer Anfrage nach dem mindestens einen Dienst von einer zweiten Endbenutzervorrichtung nach dem Empfangen der Anfrage nach dem mindestens einen Dienst von der ersten Endbenutzervorrichtung, worin eine für die Anfrage von der zweiten Endbenutzervorrichtung bestimmte Wiederholungszeit kürzer als die für die Anfrage von der ersten Endbenutzervorrichtung bestimmte Wiederholungszeit ist.

10. Nichtflüchtiges computerlesbares Medium nach Anspruch 1, worin das Verfahren ferner einschließt: Empfangen einer Anfrage nach dem mindestens einen Dienst von einer zweiten Endbenutzervorrichtung nach dem Empfangen der Anfrage nach dem mindestens einen Dienst von der ersten Endbenutzervorrichtung, worin eine für die Anfrage von der zweiten Endbenutzervorrichtung bestimmte Wiederholungszeit länger als die für die Anfrage von der ersten Endbenutzervorrichtung bestimmte Wiederholungszeit ist.

11. Computervorrichtung, umfassend:
eine Netzwerkschnittstelle, die zum kommunikativen Koppeln mit mindestens einer Endbenutzervorrichtung, um eine Anfrage zu empfangen, konfiguriert ist; und
ein nichtflüchtiges computerlesbares Medium, das Anweisungen speichert, um Folgendes zu implementieren:
einen Zähler, der eine Anzahl von Fehlern zählt, die innerhalb eines Zeitraums aufgetreten sind,
worin die Fehler Ablehnungen von Benutzervorrichtungsanfragen durch die Computervorrichtung sind; und
ein servergesteuertes adaptives Zurückhaltungsmodul, das dafür konfiguriert ist, eine Zurückhaltungszeit auf der Grundlage einer Fehlerrate über den Zeitraum und außerdem auf der Grundlage eines Prioritätszugriffs, der mit einem Benutzer der mindestens einen Endbenutzervorrichtung assoziiert ist, anzupassen, worin die Zurückhaltungszeit zu der mindestens einen Endbenutzervorrichtung übermittelt wird.

12. Computervorrichtung nach Anspruch 11, worin nacheinander übermittelte Zurückhaltungszeiten unterschiedlich sind.

## Revendications

1. Support lisible par ordinateur non transitoire qui stocke des instructions qui, lorsqu'elles sont exécutées par un dispositif informatique, ont pour effet que le dispositif informatique réalise un procédé, le procédé comprenant :
l'hébergement d'au moins un service ;
le couplage en termes de communication avec un premier dispositif d'utilisateur final ;
la réception d'une requête qui provient du premier dispositif d'utilisateur final quant à l'au moins un service ;
la commande d'une période de réajustement du premier dispositif d'utilisateur final en déterminant un temps de nouvelle tentative qui est spécifique à la requête qui provient du premier dispositif d'utilisateur final, dans lequel le temps de nouvelle tentative est basé sur une priorité d'accès qui est associée à un utilisateur du premier dispositif d'utilisateur final ; et
le relais du temps de nouvelle tentative sur le premier dispositif d'utilisateur final.

2. Support lisible par ordinateur non transitoire selon la revendication 1, dans lequel le temps de nouvelle tentative est basé au moins sur une fonction d'un taux d'erreurs internes du dispositif informatique, dans lequel le taux d'erreurs internes est observé sur une période temporelle dans laquelle le taux d'erreurs internes du dispositif informatique est associé à un nombre de requêtes qui ont été rejetées à l'intérieur de la période temporelle.

3. Support lisible par ordinateur non transitoire selon la revendication 2, dans lequel le taux d'erreurs internes du dispositif informatique est observé sur une base par service.

4. Support lisible par ordinateur non transitoire selon la revendication 1, dans lequel le temps de nouvelle tentative est basé sur une fonction d'un nombre d'événements avals en suspens.

5. Support lisible par ordinateur non transitoire selon la revendication 1, dans lequel le procédé inclut en outre la réception, après que le temps de nouvelle tentative s'est écoulé, de la requête quant à l'au moins un service qui est renvoyée depuis le premier dispositif d'utilisateur final.

6. Support lisible par ordinateur non transitoire selon la revendication 5, dans lequel le procédé inclut en outre le traitement de la requête renvoyée.

7. Support lisible par ordinateur non transitoire selon la revendication 5, dans lequel le procédé inclut en outre la répétition de l'étape de commande d'une période de réajustement et de l'étape de relais du temps de nouvelle tentative.

8. Support lisible par ordinateur non transitoire selon la revendication 1, dans lequel le procédé inclut en outre la réception d'une requête quant à l'au moins un service qui provient d'un second dispositif d'utilisateur final en même temps que la requête quant à l'au moins un service qui provient du premier dispositif d'utilisateur final est reçue, dans lequel un temps de nouvelle tentative qui est déterminé pour la requête qui provient du second dispositif d'utilisateur final est différent du temps de nouvelle tentative qui est déterminé pour la requête qui provient du premier dispositif d'utilisateur final.

9. Support lisible par ordinateur non transitoire selon la revendication 1, dans lequel le procédé inclut en outre la réception d'une requête quant à l'au moins un service qui provient d'un second dispositif d'utilisateur final après la réception de la requête quant à l'au moins un service qui provient du premier dispositif d'utilisateur final, dans lequel un temps de nouvelle tentative qui est déterminé pour la requête qui provient du second dispositif d'utilisateur final est plus court que le temps de nouvelle tentative qui est déterminé pour la requête qui provient du premier dispositif d'utilisateur final.

10. Support lisible par ordinateur non transitoire selon la revendication 1, dans lequel le procédé inclut en outre la réception d'une requête quant à l'au moins un service qui provient d'un second dispositif d'utilisateur final après la réception de la requête quant à l'au moins un service qui provient du premier dispositif d'utilisateur final, dans lequel un temps de nouvelle tentative qui est déterminé pour la requête qui provient du second dispositif d'utilisateur final est plus long que le temps de nouvelle tentative qui est déterminé pour la requête qui provient du premier dispositif d'utilisateur final.

11. Dispositif informatique comprenant :
une interface de réseau qui est configurée pour un couplage en termes de communication avec au moins un dispositif d'utilisateur final pour recevoir une requête ; et
un support lisible par ordinateur non transitoire qui stocke des instructions pour mettre en oeuvre :
un compteur qui compte un nombre d'erreurs qui sont survenues à l'intérieur d'une période temporelle ;
dans lequel les erreurs sont des rejets de requêtes de dispositif d'utilisateur par le dispositif informatique ; et
un module de réajustement adaptatif commandé par serveur qui est configuré de manière à régler un temps de nouvelle tentative sur la base d'un taux d'erreurs sur la période temporelle et également sur la base d'une priorité d'accès qui est associée à un utilisateur de l'au moins un dispositif d'utilisateur final, dans lequel le temps de nouvelle tentative est relayé sur l'au moins un dispositif d'utilisateur final.

12. Dispositif informatique selon la revendication 11, dans lequel des temps de nouvelle tentative relayés de manière consécutive sont différents.
